# FASCICULE DE BREVET EUROPEEN

(11) **EP 3 013 689 B1**
(45) Date de publication et mention de la délivrance du brevet: **30.12.2020**
(21) Numéro de dépôt: 14745187.6
(22) Date de dépôt: 27.06.2014
(51) Int. Cl.: B64D 15/04, F02C 7/047, B64D 33/02

(54) **DISPOSITIF DE DÉGIVRAGE ET DE CONDITIONNEMENT POUR AÉRONEF**
ENTEISUNGS- UND KONDITIONIERUNGSVORRICHTUNG FÜR EIN FLUGZEUG
DE-ICING AND CONDITIONING DEVICE FOR AN AIRCRAFT

(30) Priorité: 28.06.2013 FR 1356304
(43) Date de publication de la demande: 04.05.2016
(73) Titulaire: Safran Nacelles, 76700 Gonfreville-l'Orcher (FR)
(72) Inventeur: CARUEL, Pierre, F-76600 Le Havre (FR); HURLIN, Hervé, F-91430 Igny (FR)
(74) Mandataire: Delorme, Nicolas
(86) Numéro de dépôt international: PCT/FR2014/051650
(87) Numéro de publication internationale: WO 2014/207408

(56) Documents cités:
- EP-A1- 1 103 462
- EP-A1- 2 508 426
- EP-A1- 2 546 147
- EP-A2- 2 615 276
- DE-A1-102010 054 448

## Description

L'invention se situe dans le domaine des nacelles de turboréacteurs d'aéronefs et plus précisément concerne le dégivrage des nacelles de turboréacteurs.

Un avion est propulsé par un ou plusieurs ensembles propulsifs comprenant chacun un turbomoteur logé dans une nacelle tubulaire. Chaque ensemble propulsif est rattaché à l'avion par un mât situé généralement sous ou sur une aile ou au niveau du fuselage.

On entend par amont ce qui vient avant le point ou élément considéré, dans le sens de l'écoulement de l'air dans un turbomoteur, et par aval ce qui vient après le point ou élément considéré, dans le sens de l'écoulement de l'air dans le turbomoteur.

Une nacelle présente généralement une structure comprenant une entrée d'air en amont du moteur, une section médiane destinée à entourer une soufflante ou les compresseurs du turbomoteur et son carter, une section aval pouvant abriter des moyens d'inversion de poussée et destinée à entourer le générateur de gaz du turbomoteur, et est généralement terminée par une tuyère d'éjection dont la sortie est située en aval du turbomoteur.

Classiquement, l'espace compris entre la nacelle et le turbomoteur s'appelle veine secondaire.

De manière générale, le turbomoteur comprend un ensemble de pales (compresseur et éventuellement soufflante ou hélice non carénée) entraînées en rotation par un générateur de gaz à travers un ensemble de moyens de transmission.

Un système de distribution de lubrifiant est prévu pour assurer une bonne lubrification de ces moyens de transmission et de tout autre accessoire comme les générateurs électriques, et les refroidir.

En vol, selon les conditions de température et d'humidité, de la glace peut se former sur la nacelle, notamment au niveau de la surface externe de la lèvre d'entrée d'air équipant la section d'entrée d'air.

La présence de glace ou de givre modifie les propriétés aérodynamiques de l'entrée d'air et perturbe l'acheminement de l'air vers la soufflante. De plus, la formation de givre sur l'entrée d'air de la nacelle et l'ingestion de glace par le moteur en cas de détachement de blocs de glace peuvent endommager le moteur ou la voilure, et présenter un risque pour la sécurité du vol.

Une solution pour dégivrer la surface externe de la nacelle consiste à éviter que de la glace ne se forme sur cette surface externe en maintenant la surface concernée à une température suffisante.

Ainsi, la chaleur du lubrifiant peut être utilisée pour réchauffer les surfaces externes de la nacelle, le lubrifiant étant de ce fait refroidi et en mesure d'être réutilisé dans le circuit de lubrification.

Les documents US4782658 et EP1479889 notamment, décrivent la mise en œuvre de tels systèmes de dégivrage utilisant la chaleur du lubrifiant moteur.

Plus précisément, le document US4782658 décrit un système de dégivrage utilisant de l'air extérieur prélevé par une écope et réchauffé au travers d'un échangeur air / huile pour servir au dégivrage. Un tel système permet un meilleur contrôle des énergies thermiques échangées, mais la présence d'écopes dans la surface externe de la nacelle entraîne une perte des performances aérodynamiques.

Le document EP1479889 décrit quant à lui un système de dégivrage d'une structure d'entrée d'air de nacelle de turboréacteur utilisant un échangeur air / huile en circuit fermé, l'air intérieur réchauffé de la structure d'entrée d'air étant mis en circulationforcée par un ventilateur.

Il convient de noter que la structure d'entrée d'air est creuse et forme une chambre fermée de circulation d'air de dégivrage réchauffé par l'échangeur disposé à l'intérieur de cette chambre.

Ainsi, l'énergie thermique disponible pour le dégivrage dépend de la température du lubrifiant.

En outre, la surface d'échange de la structure d'entrée d'air est fixe et limitée et l'énergie réellement dissipée dépend essentiellement de la chaleur nécessaire au dégivrage et donc des conditions extérieures.

Il s'ensuit que le refroidissement du lubrifiant, ainsi que la température à laquelle est maintenue l'entrée d'air, sont difficilement contrôlables.

Il existe une autre solution dans laquelle sont associés un échangeur de chaleur et des conduits de circulation d'un fluide à réchauffer de manière à former plusieurs boucles de recirculation du fluide à réchauffer à travers l'échangeur, et de telle façon qu'une zone de circulation du fluide à réchauffer soit en contact avec une paroi externe de manière à permettre un échange de chaleur par conduction avec l'air extérieur de la nacelle. La circulation du fluide à réchauffer se fait par circulation forcée.

On connaît aussi des solutions (voir par exemple les documents EP1103462 et EP2508426) pour dégivrer les nacelles de turboréacteurs au moyen de prélèvements d'air chaud. Ces solutions reposent classiquement sur un prélèvement d'air chaud dans le compresseur du turboréacteur. Cet air chaud prélevé est sous haute pression et forte température, pour une part il est amené directement dans une lèvre d'entrée d'air à dégivrer d'une nacelle, pour une autre part il est conduit vers un échangeur air/air (« precooler » en terminologie anglo-saxonne) puis où il est refroidi par l'air extérieur pour son utilisationpourle conditionnement d'air cabine et le dégivrage de la voilure de l'aéronef.

Il a été constaté que des systèmes tels que précédemment présentés de dégivrage de la lèvre d'entrée d'air par refroidissement de lubrifiant provoquent des pertes de charge dans la veine secondaire dues à la présence de l'échangeur, et des pertes de poussée moteur quand est effectué un prélèvement d'air dans la veine secondaire où ces pertes ont un impact important sur la consommation (elles représentent environ 0.5% de la consommation totale), mais aussi que de tels systèmes présentent une mauvaise efficacité lorsque le turboréacteurtourne au ralenti et / ou à faible régime(par exemple pendant la phase de roulage au sol de l'avion ou quand l'avion est en descente) dans le cas où le refroidissement de l'huile moteur implique un prélèvement d'air provenant de l'extérieur de la nacelle.

Les solutions consistant à dégivrer la lèvre d'entrée d'air par prélèvement d'air chaud dans le compresseur présentent des inconvénients notamment en ce que la forte température de l'air prélevé dans le compresseur du turboréacteur conduit à l'utilisation de matériaux onéreux pour la cloison avant de l'entrée d'air à dégivreret pour la canalisation d'arrivée souvent à plus d'uneparoi pour réduire les risques d'éclatement, et qu'elles mettent en œuvre un prélèvement d'air spécifique sur le compresseur haute pression ce qui réduit la puissance ou la poussée disponible du turboréacteur. En effet, les solutions de dégivrage par prélèvement d'air chaud dans le compresseur du turboréacteur présentées plus haut mettent en œuvre classiquement trois prélèvements d'air dans le compresseur dont un dédié au dégivrage de la lèvre d'entrée d'air de la nacelle.

D'autres exemples relevants de l'art antérieur sont fournis par les documents EP2615276 (pas pré-publié) et DE102010054448.

Un but de la présente invention est de proposer un dispositif de dégivrage affranchi des inconvénients précités.

A cet effet, la présente invention a pour objet un dispositif de dégivrage d'une lèvre d'entrée d'air d'une nacelle d'aéronef, selon la revendication 1.

Selon d'autres caractéristiques de l'invention, le dispositif de dégivrage comporte l'une ou plusieurs des caractéristiques optionnelles suivantes considérées seules ou selon toutes les combinaisons possibles :
- le dispositif de dégivrage comprend une vanne de décharge de l'air haute pression circulant dans le pré-échangeur ;
- le dispositif de dégivrage comprend une vanne de mélange d'au moins une partie de l'air haute pression destiné au conditionnement cabine et au dégivrage voilure avec l'air basse pression destiné au dégivrage lèvre d'entrée d'air ;
- le dispositif de dégivrage comprend un détecteur de la température de la lèvre d'entrée d'air ;

L'invention concerne aussi une nacelle équipée d'un dispositif de dégivrage selon l'invention et un moyen de forçage en ouverture pour chaque vanne commandée mise en œuvre dans le dispositif de dégivrage selon l'invention.

L'invention concerne aussi un aéronef équipé d'une nacelle selon l'invention

Cette solution permet de supprimer le prélèvement d'air du compresseur dédié au dégivrage de la lèvre d'entrée d'air de la nacelle de l'aéronef et directement relié à la lèvre, mais aussi de réduire la température de l'air de dégivrage de la lèvre d'entrée d'air de telle manière que des matériaux moins onéreux ou plus légers peuvent être utilisés pour fabriquer la cloison avant de la lèvre, comme par exemple de l'aluminium ou certains matériaux composites en lieu et place du titane souvent utilisé jusqu'alors.

De plus cette solution n'a pas d'influence sur la mise à disposition de l'aéronef ni sur la fiabilité de ce dernier, le même nombre de vannes étant présent notamment, et ne présente pas de vanne de prélèvement d'air en aval du compresseur dédié contrairement à un design classique de nacelle.

On décrit à présent, à titre d'exemple non limitatif, plusieurs modes de réalisation possibles de l'invention, en référence aux figures annexées ; sur l'ensemble des figures, des références identiques ou analogues désignent des organes ou ensembles d'organes identiques ou analogues :
- la figure 1 est une vue schématique d'un premier réseau de circulation de l'air selon un premier mode de réalisation de la présente invention,
- la figure 2 est une vue schématique d'unsecond réseau de circulation de l'air selon un second mode de réalisation de la présente invention, et
- la figure 3 est une vue schématique d'un troisième réseau de circulation de l'air selon un troisième mode de réalisation de la présente invention.

Dans tous les modes de réalisation décrits ci-après, et dans un souci de simplification, les canalisations reliant les différents éléments du réseau de circulation d'air sont chacune appelées « canalisation 3 ».

Dans tous les modes de réalisation décrits ci-après, on entend par « traverser le réseau » traverser tout ou partie d'un réseau, on entend par « vanne commandée » une vanne tenant un rôle de robinet-vanne, actionneur ou non.

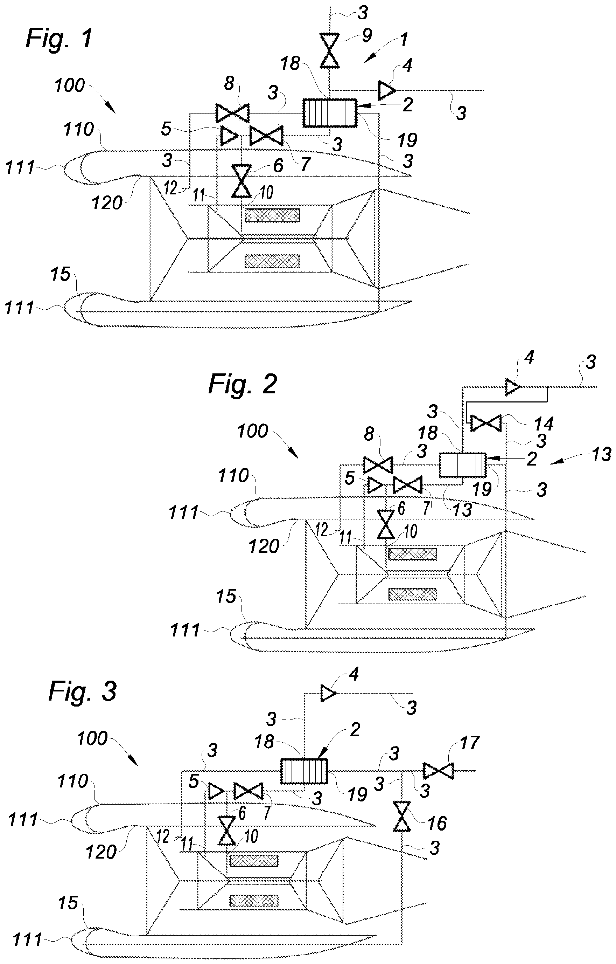

En référence à la figure 1, on décrit le premier réseau 1 de circulation d'air selon le premier mode de réalisation de la présente invention.

Le premier réseau 1 est compris dans une nacelle 100 d'avion.

La nacelle 100 comprend une paroi aérodynamique externe 110 comprenant une lèvre d'entrée d'air 111 amont, une paroi aérodynamique interne 120, la lèvre d'entrée d'air 111 reliant en amont les deux parois aérodynamiques externe 110 et interne 120.

Le premier réseau 1 de circulation d'air pour le refroidissement d'air haute pression comprend unpré-échangeur de chaleur.

Le premier réseau 1 comprend des vannes anti-retour n'autorisant la circulation de l'air que dans un sens (respectivement 4, 5), des vannes commandées (respectivement 6, 7, 8, 9), et les canalisations3. Les vannes 4, 5, 6, 7, 8, 9 servent à contrôler la circulation de l'air dans le premier réseau 1.

Le premier réseau 1 comprend deux orifices de prélèvement d'air haute pressionà deux étages différents du compresseur 10 et 11 destinés à alimenter en air chaud haute pression le premier réseau 1, ainsi qu'un orifice de prélèvement 12 d'air basse pression en aval de la soufflante destiné à alimenter en air froid basse pression le premier réseau 1.

En fonctionnement du premier réseau 1, de l'air chaud haute pression pénètre par les orifices de prélèvement d'air haute pression en aval des étages des compresseurs 10 et 11, et de l'air froid basse pression pénètre par l'orifice de prélèvement 12 d'air basse pression en aval de la soufflante.

Les débits d'entrée de l'air chaud haute pression et de l'air froid basse pression dans le premier réseau 1 sont réglés au moyen des vannes commandées 6, 7, 8 en fonction du besoin.

L'air chaud haute pression entre donc dans le premier réseau 1 *via* les deux orifices 10, 11 de prélèvement d'air en aval du compresseur. Les canalisations 3 reliant les orifices 10, 11 se rejoignent en amont du pré-échangeur 2.

L'air chaud haute pression pénètre par l'orifice 11 de prélèvement d'air haute pression en aval de l'étage où a lieu le prélèvement du compresseur dans la canalisation 3 du premier réseau 1. Cet air passe ensuite par la vanne anti-retour 5 du premier réseau 1, la canalisation 3, la vanne commandée 7 puis le pré-échangeur 2.

Simultanément, l'air chaud haute pression pénètre aussi par l'orifice 10 de prélèvement d'air en aval d'un autre étage plus à l'aval du compresseur dans la canalisation 3 du premier réseau 1. Cet air passe ensuite par la vanne commandée 6 du premier réseau 1, la canalisation 3, puis par la vanne commandée 7 et enfin par le pré-échangeur 2.

En fonction du besoin en pression pour le conditionnement d'air cabine, la vanne 6 peut être ouverte ou fermée.

Lorsque la vanne 6 est fermée, l'air circule de l'orifice 11 vers le pré-échangeur 2 via vanne anti-retour 5.

Lorsque la vanne 6 est ouverte, la pression de l'air prélevée via l'orifice 10 étant plus élevée que la pression de l'air prélevé via l'orifice 11, la vanne anti-retour 5 se ferme et l'air circule ainsi de l'orifice 10 vers le pré-échangeur 2.

Simultanément, de l'air froid basse pression pénètre par l'orifice de prélèvement 12 d'air basse pression en aval de la soufflante dans la canalisation 3 du premier réseau 1. Cet air basse pression passe ensuite par la vanne commandée 8 du premier réseau 1, la canalisation 3, puis pénètre dans le pré-échangeur 2. L'ouverture de la vanne commandée 8 de prélèvement soufflante est pilotée afin de maintenir une température de l'air de conditionnement adéquate.

Le pré-échangeur 2 est un pré-échangeur choisi parmi tous ceux connus de l'homme du métier et il est bien entendu adapté à l'utilisation qui en est faite dans la nacelle de turboréacteur et son fonctionnement est connu.

Le pré-échangeur 2 présenteau moins deux sorties,l'une de l'air à haute pression 18 et l'autre de l'air à basse pression 19 auxquelles sont reliées des canalisations 3 de sortie.

Une fois que l'air a pénétré dans le pré-échangeur 2, il en ressort par les canalisations 3 de sortie.

La canalisation 3 de sortie basse pression 19 du pré-échangeur 2 permet d'acheminer l'air basse pression y circulant directement vers la lèvre d'entrée d'air 111 afin de la dégivrer le cas échéant.

La lèvre d'entrée d'air 111 peut aussi comprendre un détecteur de sur-température 15 pouvant servir à couper l'alimentation de l'air haute pression issu du compresseur du turboréacteur de l'aéronef en cas de panne d'un organe de régulation comme la vanne commandée 8 de prélèvement soufflante.

La canalisation 3 de sortie haute pression18 se dédouble ensuite pour que l'une des canalisations 3 résultantes permette à une partie de l'air haute pression de circuler vers la sortie de la nacelle pour en être éjecté après avoir traversé la vanne commandée 9, aussi appelée vanne de décharge 9, permettant de régler le débit de décharge de l'air haute pression venant du pré-échangeur 2, cette vanne commandée 9 n'étant utilisée que pendant les phases ou le dégivrage de la lèvre d'entrée d'air 111 est actif; l'autre des canalisations 3 résultantes permet à l'autre partie de l'air haute pression de circuler vers une unité de conditionnement (non représentée) de l'air d'une cabine de l'aéronef comprenant la nacelle 100 et une unité de dégivrage d'une voilure de l'aéronef après avoir traversé la vanne anti-retour 4, utilisée pour empêcher l'air de s'écouler depuis le circuit de conditionnement d'air vers le moteur en cas de panne de celui-ci.

Lorsque le dégivrage n'est pas actif, la vanne de décharge 9 est maintenue fermée, la pression dans le circuit de conditionnement d'air est régulée par les vannes 6 et 7, et la température est régulée en faisant varier le débit d'air basse pression dans le pré-échangeur 2 par l'intermédiaire de la vanne 8. La température et le débit d'air envoyé dans la lèvre sont une conséquence du réglage des vannes précédentes.

Lorsque le dégivrage est nécessaire, le mode de régulation des vannes change. Le débit d'air de dégivrage est régulé par la vanne basse pression 8. La température de l'air de dégivrage estrégulée par le débit d'air haute pression dans le pré-échangeur par les vannes 6 et 7. La pression dans le circuit de conditionnement d'air est réglé par la vanne de décharge 9.

En référence à la figure 2, on décrit le second réseau 13de circulation d'air selon le second mode de réalisation de la présente invention.

Ce second réseau 13 est similaire au premier réseau 1 pour tout ce qui concerne le réseau de circulation de l'air en amont du pré-échangeur 2.

Le pré-échangeur 2 comporte aussi une sortie haute pression 18 et une sortie basse pression19 auxquelles sont reliées deux canalisations 3 de sortie.

Toutefois, aucune de ces canalisations 3 de sortie ne se dédouble, il ne reste ainsi que la canalisation 3 de sortie permettant d'acheminer directement l'air basse pression du pré-échangeur 2 vers la lèvre d'entrée d'air 111 pour son éventuel dégivrage, et la canalisation 3 de sortie haute pression permettant d'acheminer l'air du pré-échangeur 2 à l'unité de conditionnement et de dégivrage de la voilure de l'aéronefen passant par la vanne anti-retour 4.

Le second réseau 13 comporte aussi une vanne commandée 14 installée dans une canalisation 3 reliant la canalisation 3 de la sortiehaute pression 18 de la vanne anti-retour 4 et la canalisation 3 de la sortie basse pression 19 du pré-échangeur 2. Cette vanne commandée 14 est une vanne de mélange permettant de mélanger l'air circulant dans les deux canalisations 3 de sortie du pré-échangeur 2. Cette vanne commandée 14 de mélange permet de supprimer le dédoublement de la canalisation 3 de sortie qui était dédoublée dans le premier réseau 1 ainsi que l'éjection d'air haute pression à l'extérieur de la nacelle 100.

La vanne commandée 14 de mélange est pilotée de façon à maintenir la température voulue dans le système de dégivrage.

De la même manière que montré dans la figure 1, la lèvre d'entrée d'air 111 peut comprendre un détecteur de sur-température 15 dont le fonctionnement est similaire à celui explicité dans la description de la figure 1.

Le fonctionnement du second réseau 13 en amont du pré-échangeur 2 est similaire à celui du premier réseau 1 illustré sur la figure 1.

Le troisième réseau 13 représenté à la figure 3 est similaire au premier, à la différence où la vanne de décharge 9 et la vanne 8 sont supprimées. L'air basse pression à la sortie basse pression 19 du pré-échangeur 2 est dévié vers une vanne 17 permettant son éjection vers l'extérieur de la nacelle 100 et vers la lèvre 111 par l'intermédiaire d'une vanne commandée 16 lorsque le dégivrage est actif.

La vanne 16 commande le débit d'air basse pression de dégivrage. La température d'airvers lecircuit de conditionnement d'air avion est réglée en ajustant le débit par la vanne 17.

Lorsque le dégivrage n'est pas actif, la vanne de sortie 17 régule le débit d'air basse pression comme dans le premier réseau et la vanne 16 est fermée.

En cas de pannes, le dispositif selon l'invention permet, dans certains cas, de pallier à certaines conséquences non désirables.

Par exemple lorsque la vanne commandée 7, présente sur le réseau 1 et qui permet de réguler le prélèvement d'air chaud haute pression dans le turboréacteur, tombe en panne et reste bloquée ouverte ou est forcée ouverte, alors la vanne commandée 9 de décharge permet de réguler la pression dans le premier réseau 1 de circulation de l'air.

Lorsque c'est la vanne commandée 9 qui tombe en panne de telle manière qu'elle reste bloquée en position ouverte ou qu'elle est forcée à l'ouverture, le dégivrage de la nacelle ne peut plus être activé pour certains cas de vol seulement, c'est la vanne commandée 7 de régulation du prélèvement d'air chaud qui sert alors à réguler la température de dégivrage de la nacelle tandis que le conditionnement de l'air pour la cabine de l'aéronef ainsi que le dégivrage voilure sont réalisés avec un autre moteur.

Lorsque c'est la vanne commandée 8 de prélèvement soufflante qui est bloquée ouverte ou bien forcée à l'ouverture, la régulation de la température de dégivrage nacelle se fait avec la vanne commandée 9 de décharge pour éviter de perdre le conditionnement de l'air et la possibilité de dégivrer la nacelle.

Bien que l'invention ait été décrite avec des exemples particuliers de réalisation, il est bien évident qu'elle n'y est nullement limitée et qu'elle comprend tous les équivalents techniques des moyens décrits, ainsi que leurs combinaisons si celles-ci entrent dans le cadre des revendications.

## Revendications

1. Dispositif de dégivrage d'une lèvre d'entrée d'air (111) d'une nacelle (100) d'aéronef, le dit dispositif comprenant un réseau de circulation d'air et un pré-échangeur (2) installé dans le réseau (1, 13) de circulation d'air, le réseau de circulation d'air comprenant un moyen de prélèvement apte à prélever de l'air froid basse pression en aval de la soufflante (12), deux moyens de prélèvement aptes à prélever de l'air chaud haute pression en aval du compresseur (10, 11), ainsi que des vannes commandées (6, 7, 8, 9, 14) et des vannes anti-retour (4, 5), le pré-échangeur (2) comprenant une entrée d'air basse pression, reliée par une canalisation du réseau de circulation d'air au moyen de prélèvement d'air froid basse pression, une entrée d'air haute pression, reliée par une canalisation du réseau de circulation d'air aux moyens de prélèvement d'air chaud haute pression, une sortie d'air basse pression (19) et une sortie d'air haute pression (18), **caractérisé en ce que** la sortie d'air basse pression (19) est apte à déboucher dans la lèvre d'entrée d'air de la nacelle (100) de l'aéronef via une canalisation (3) du réseau de circulation d'air, et **en ce qu'** une canalisation du réseau de circulation d'air reliée à a sortie d'air haute pression comprend une vanne anti-retour (4).

2. Dispositif de dégivrage selon la revendication 1 **caractérisé en ce qu'**il comprend une vanne (9) de décharge de l'air haute pression circulant dans le pré-échangeur (2).

3. Dispositif de dégivrage selon l'une quelconque des revendications précédentes **caractérisé en ce qu'**il comprend une vanne (14) de mélange d'au moins une partie de l'air haute pression destiné au conditionnement cabine et au dégivrage voilure avec l'air basse pression destiné au dégivrage lèvre d'entrée d'air (111) en sortie du pré-échangeur (2).

4. Dispositif de dégivrage selon l'une quelconque des revendications précédentes **caractérisé en ce qu'**il comprend une vanne (16) entre la sortie basse pression du pré-échangeur (2) et de la lèvre d'entrée d'air (111).

5. Dispositif de dégivrage selon l'une quelconque des revendications précédentes **caractérisé en ce qu'**il comprend une vanne (17) entre la sortie basse pression du pré-échangeur (2) et l'extérieur de la nacelle.

6. Dispositif de dégivrage selon l'une quelconque des revendications précédentes **caractérisé en ce qu'**il comprend un détecteur (15) de la température de la lèvre d'entrée d'air (111) apte à désactiver le dégivrage de la lèvre d'entrée d'air (111) en cas de surchauffe de la lèvre d'entrée d'air (111).

7. Nacelle (100) **caractérisée en ce qu'**elle est équipée d'un dispositif de dégivrage selon l'une quelconque des revendications précédentes.

8. Nacelle selon la revendication 7 **caractérisée en ce qu'**elle comprend un moyen de forçage en ouverture pour chaque vanne commandée.

9. Aéronef équipé d'une nacelle selon l'une quelconque des revendications 7 et 8.

## Patentansprüche

1. Enteisungsvorrichtung einer Lufteintrittslippe (111) einer Gondel (100) eines Luftfahrzeugs, wobei die Vorrichtung ein Luftumlaufnetz und einen Vortauscher (2) umfasst, der in dem Luftumlaufnetz (1, 13) installiert ist, wobei das Luftumlaufnetz ein Entnahmemittel umfasst, das fähig ist, kalte Niederdruckluft stromabwärts von dem Gebläse (12) zu entnehmen, zwei Entnahmemittel, die fähig sind, heiße Hochdruckluft stromabwärts von dem Kompressor (10, 11) zu entnehmen, sowie geregelte Ventile (6, 7, 8, 9, 14) und Rückschlagventile (4, 5), wobei der Vortauscher (2) einen Niederdrucklufteintritt umfasst, der über ein Leitungsnetz des Luftumlaufnetzes mit dem Entnahmemittel für kalte Niederdruckluft verbunden ist, einen Hochdrucklufteintritt, der über ein Leitungsnetz des Luftumlaufnetzes mit den Entnahmemitteln für heiße Hochdruckluft verbunden ist, einen Niederdruckluftaustritt (19) und einen Hochdruckluftaustritt (18), **dadurch gekennzeichnet, dass** der Niederdruckluftaustritt (19) fähig ist, in die Lufteintrittslippe der Gondel (100) des Luftfahrzeugs über ein Leitungsnetz (3) des Luftumlaufnetzes zu münden, und dadurch, dass ein Leitungsnetz des Luftumlaufnetzes, das mit einem Hochdruckluftaustritt verbunden ist, ein Rückschlagventil (4) umfasst.

2. Enteisungsvorrichtung nach Anspruch 1, **dadurch gekennzeichnet, dass** sie ein Ablassventil (9) für die Hochdruckluft umfasst, die in dem Vortauscher (2) zirkuliert.

3. Enteisungsvorrichtung nach einem der vorstehenden Ansprüche, **dadurch gekennzeichnet, dass** sie ein Ventil (14) zum Mischen mindestens eines Teils der Hochdruckluft, die für die Kabinenklimatisierung und für die Tragflächenenteisung bestimmt ist, mit der Niederdruckluft umfasst, die für die Enteisung der Lufteintrittslippe (111) am Austritt des Vortauschers (2) bestimmt ist.

4. Enteisungsvorrichtung nach einem der vorstehenden Ansprüche, **dadurch gekennzeichnet, dass** sie ein Ventil (16) zwischen dem Niederdruckaustritt des Vortauschers (2) und der Lufteintrittslippe (111) umfasst.

5. Enteisungsvorrichtung nach einem der vorstehenden Ansprüche, **dadurch gekennzeichnet, dass** sie ein Ventil (17) zwischen dem Niederdruckaustritt des Vortauschers (2) und dem Außenbereich der Gondel umfasst.

6. Enteisungsvorrichtung nach einem der vorstehenden Ansprüche, **dadurch gekennzeichnet, dass** sie einen Detektor (15) für die Temperatur der Lufteintrittslippe (111) umfasst, der fähig ist, die Enteisung der Lufteintrittslippe (111) im Fall einer Überhitzung der Lufteintrittslippe (111) zu deaktivieren.

7. Gondel (100), **dadurch gekennzeichnet, dass** sie mit einer Enteisungsvorrichtung nach einem der vorstehenden Ansprüche ausgestattet ist.

8. Gondel nach Anspruch 7, **dadurch gekennzeichnet, dass** sie ein Mittel zur Zwangsöffnung für jedes geregeltes Ventil umfasst.

9. Luftfahrzeug, das mit einer Gondel nach einem der Ansprüche 7 und 8 ausgestattet ist.

## Claims

1. A device for de-icing an air intake lip (111) of an aircraft nacelle (100), said device comprising an air circulation network and a pre-exchanger (2) installed in the air circulation network (1, 13), the air circulation network comprising collection means able to collect cool low-pressure air downstream of a fan (12), two collection means able to collect hot high-pressure air downstream of the compressor (10, 11), as well as controlled valves (6, 7, 8, 9, 14) and check valves (4, 5), the pre-exchanger (2) comprising a low-pressure air intake connected by a piping of the air circulation network to the collection means able to collect cool low-pressure air, a high-pressure air intake, connected by a piping of the air circulation network to the collection means able to collect hot high-pressure air, a low-pressure air outlet (19) and a high-pressure air outlet (18), **characterized in that** the low-pressure air outlet (19) is able to open into the air intake lip of the aircraft nacelle (100) via a piping (3) of the air circulation network, and **in that** a piping of the air circulation network connected to the high-pressure air outlet comprises a check valve (4).

2. A device for de-icing according to claim 1 **characterized in that** it comprises a high-pressure air discharge valve (9) circulating into the pre-exchanger (2).

3. A device for de-icing according to any of the preceding claims **characterized in that** it comprises a mixing valve (14) of at least a part of the high-pressure air for the cabin conditioning and the airfoil de-icing with the low-pressure air for the air intake lip (111) at the outlet of the pre-exchanger (2).

4. A device for de-icing according to any of the preceding claims **characterized in that** it comprises a valve (16) between the low-pressure outlet of the pre-exchanger (2) and of the air intake lip (111).

5. A device for de-icing according to any of the preceding claims **characterized in that** it comprises a valve (17) between the low-pressure outlet of the pre-exchanger (2) and the outside of the nacelle.

6. A device for de-icing according to any of the preceding claims **characterized in that** it comprises a detector (15) of the temperature of the air intake lip (111), configured to disable the de-icing of the air intake lip (111) in case of overheat of the air intake lip (111).

7. Nacelle (100) **characterized in that** it is equipped with a de-icing device according to any of the preceding claims.

8. Nacelle according to claim 7 **characterized in that** it comprises a forced opening means for each controlled valve.

9. An aircraft comprising a nacelle according to any of claims 7 and 8.
